# EUROPEAN PATENT APPLICATION

(11) **EP 1 871 100 A2**
(43) Date of publication of application: **26.12.2007**
(21) Application number: 07001736.3
(22) Date of filing: 26.01.2007
(51) Int. Cl.: H04N 5/44

(54) **Adaptive video processing using sub-frame metadata**

(30) Priority: 23.06.2006 US 474032; 20.07.2006 US 491051
(71) Applicant: Broadcom Corporation, Irvine, CA 92617 (US)
(72) Inventor: Bennett, James D., 92672 San Clemente, CA (US)
(74) Representative: Jehle, Volker Armin

(57) **Abstract**

A video processing system applies sub-frame processing to video data to generate both a first sequence of sub-frames of video data and a second sequence of sub-frames of video data. The first sequence of sub-frames of video data and the second sequence of sub-frames of video data are defined by metadata. The processing circuitry generates a third sequence of sub-frames of video data by combining the first sequence of sub-frames of video data with the second sequence of sub-frames of video data. Adaptive video processing circuitry receives encoded source video data, raw source video data, similar display metadata, target display metadata, and/or target display information. The adaptive video processing circuitry processes its input information to produce one or more outputs that include tailored metadata, encoded target display video data, target display video data, and DRM/Billing Signaling.

## Description

### CROSS REFERENCES TO RELATED APPLICATIONS

The present application is a continuation-in-part of Utility Application Serial No. 11/474,032 filed on June 23, 2006, and entitled "VIDEO PROCESSING SYSTEM THAT GENERATES SUB-FRAME METADATA," (BP5273), which is incorporated herein by reference in its entirety for all purposes.

The present application is related to the following co-pending applications:
1. Utility Application Serial No. 11/xxx,xxx filed on even date herewith, and entitled "ADAPTIVE VIDEO PROCESSING CIRCUITRY & PLAYER USING SUB-FRAME METADATA" (BP5446); and
2. Utility Application Serial No: 11/xxx,xxx filed on even date herewith, and entitled "SIMULTANEOUS VIDEO AND SUB-FRAME METADATA CAPTURE SYSTEM" (BP5448), both of which are incorporated herein by reference for all purposes.

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC - NOT APPLICABLE

### BACKGROUND OF THE INVENTION

### 1. TECHNICAL FIELD OF THE INVENTION

This invention is related generally to video processing devices, and more particularly to the preparation of video information to be displayed on a video player.

### 2. DESCRIPTION OF RELATED ART

Movies and other video content are often captured using 35 mm film with a 16:9 aspect ratio. When a movie enters the primary movie market, the 35 mm film is reproduced and distributed to various movie theatres for sale of the movie to movie viewers. For example, movie theatres typically project the movie on a "big-screen" to an audience of paying viewers by sending high lumen light through the 35 mm film. Once a movie has left the "big-screen," the movie often enters a secondary market, in which distribution is accomplished by the sale of video discs or tapes (e.g., VHS tapes, DVD's, high-definition (HD)-DVD's, Blue-ray DVD's, and other recording mediums) containing the movie to individual viewers. Other options for secondary market distribution of the movie include download via the Internet and broadcasting by television network providers.

For distribution via the secondary market, the 35 mm film content is translated film frame by film frame into raw digital video. For HD resolution requiring at least 1920x1080 pixels per film frame, such raw digital video would require about 25 GB of storage for a two-hour movie. To avoid such storage requirements, encoders are typically applied to encode and compress the raw digital video, significantly reducing the storage requirements. Examples of encoding standards include, but are not limited to, Motion Pictures Expert Group (MPEG)-1, MPEG-2, MPEG-2-enhanced for HD, MPEG-4 AVC, H.261, H.263 and Society of Motion Picture and Television Engineers (SMPTE) VC-1.

To accommodate the demand for displaying movies on telephones, personal digital assistants (PDAs) and other handheld devices, compressed digital video data is typically downloaded via the Internet or otherwise uploaded or stored on the handheld device, and the handheld device decompresses and decodes the video data for display to a user on a video display associated with the handheld device. However, the size of such handheld devices typically restricts the size of the video display (screen) on the handheld device. For example, small screens on handheld devices are often sized just over two (2) inches diagonal. By comparison, televisions often have screens with a diagonal measurement of thirty to sixty inches or more. This difference in screen size has a profound affect on the viewer's perceived image quality.

For example, typical, conventional PDA's and high-end telephones have width to height screen ratios of the human eye. On a small screen, the human eye often fails to perceive small details, such as text, facial features, and distant objects. For example, in the movie theatre, a viewer of a panoramic scene that contains a distant actor and a roadway sign might easily be able to identify facial expressions and read the sign's text. On an HD television screen, such perception might also be possible. However, when translated to a small screen of a handheld device, perceiving the facial expressions and text often proves impossible due to limitations of the human eye.

Screen resolution is limited if not by technology then by the human eye no matter what the size screen. On a small screen however, such limitations have the greatest impact. For example, typical, conventional PDA's and high-end telephones have width to height screen ratios of 4:3 and are often capable of displaying QVGA video at a resolution of 320x240 pixels. By contrast, HD televisions typically have screen ratios of 16:9 and are capable of displaying resolutions up to 1920x1080 pixels. In the process of converting HD video to fit the far lesser number of pixels of the smaller screen, pixel data is combined and details are effectively lost. An attempt to increase the number of pixels on the smaller screen to that of an HD television might avoid the conversion process, but, as mentioned previously, the human eye will impose its own limitations and details will still be lost.

Video transcoding and editing systems are typically used to convert video from one format and resolution to another for playback on a particular screen. For example, such systems might input DVD video and, after performing a conversion process, output video that will be played back on a QVGA screen. Interactive editing functionality might also be employed along with the conversion process to produce an edited and converted output video. To support a variety of different screen sizes, resolutions and encoding standards, multiple output video streams or files must be generated.

Video is usually captured in the "big-screen" format, which server well for theatre viewing. Because this video is later transcoded, the "big-screen" format video may not adequately support conversion to smaller screen sizes. In such case, no conversion process will produce suitable video for display on small screens. Further limitations and disadvantages of conventional and traditional approaches will become apparent to one of ordinary skill in the art through comparison of such systems with various aspects of the present invention.

### BRIEF SUMMARY OF THE INVENTION

The present invention is directed to apparatus and methods of operation that are further described in the following Brief Description of the Drawings, the Detailed Description of the Invention, and the claims.

According to an aspect of the invention, a video circuitry that receives encoded video is provided, the encoded video representing a sequence of full frames of video data, the video circuitry comprising:
processing circuitry that applies decoding and sub-frame processing to the encoded video to generate both a first sequence of sub-frames of video data and a second sequence of sub-frames of video data;
the first sequence of sub-frames of video data corresponding to a different region within the sequence of full frames of video data than that of the second sequence of sub-frames of video data; and
the processing circuitry generates a third sequence of sub-frames of video data by combining the first sequence of sub-frames of video data with the second sequence of sub-frames of video data.

Advantageously, the processing circuitry encodes the third sequence of sub-frames of video data.

Advantageously, the decoding and sub-frame processing applied by the processing circuitry occur in sequence.

Advantageously, the decoding and sub-frame processing applied by the processing circuitry are integrated.

Advantageously, the processing circuitry carries out the sub-frame processing pursuant to sub-frame metadata.

Advantageously, the processing circuitry tailors the sub-frame metadata based on a characteristic of a target display device before carrying out the sub-frame processing.

Advantageously, the processing circuitry tailors the third sequence of sub-frames of video data based on a characteristic of a target display device.

Advantageously, the processing circuitry comprising digital rights management.

Advantageously, the processing circuitry comprising billing management.

According to an aspect of the invention, a video system is provided that receives video representative of a sequence of full frames of video data, the video circuitry comprising:
processing circuitry that applies sub-frame processing to the video to generate both a first sequence of sub-frames of video data and a second sequence of sub-frames of video data;
the first sequence of sub-frames of video data being defined by at least a first parameter, and the second sequence of sub-frames of video data being defined by at least a second parameter, both the at least the first parameter and the at least the second parameter together comprising metadata;
the processing circuitry receives the metadata for the sub-frame processing; and
the processing circuitry generates a third sequence of sub-frames of video data by combining the first sequence of sub-frames of video data with the second sequence of sub-frames of video data.

Advantageously, the processing circuitry receives the metadata via a communication link.

Advantageously, the processing circuitry receives the metadata from a removable storage device.

Advantageously, the metadata comprising a metadata file, and the metadata file comprising at least one video adjustment parameter associated with at least a portion of the first sequence of sub-frames of video data.

Advantageously, the third sequence of sub-frames of video data is delivered for presentation on a target display.

Advantageously, the processing circuitry tailors the metadata before performing the sub-frame processing.

Advantageously, the tailoring comprising adapting the third sequence of sub-frames of video data for presentation on a target display.

Advantageously, the target display is located at a different premises than that of the video system.

According to an aspect of the invention, a method for video processing comprises:
receiving video data representative of a sequence of full frames of video data;
sub-frame processing the video data to generate both a first sequence of sub-frames of video data and a second sequence of sub-frames of video data, the first sequence of sub-frames of video data defined by at least a first parameter, the second sequence of sub-frames of video data defined by at least a second parameter, and the at least the first parameter and the at least the second parameter together comprise metadata; and
generating a third sequence of sub-frames of video data by combining the first sequence of sub-frames of video data with the second sequence of sub-frames of video data.

Advantageously:
the first sequence of sub-frames of video data correspond to a first region within the sequence of full frames of video data;
the second sequence of sub-frames of video data correspond to a second region within the sequence of full frames of video data; and
the first region differs from the second region.

Advantageously, the method further comprises decoding the video data.

Advantageously, decoding the video data occurs prior to sub-frame processing the video data.

Advantageously, the method further comprises encoding the third sequence of sub-frames of video data.

Advantageously, the method further comprises tailoring the metadata based on a characteristic of a target video display device prior to sub-frame processing the video data.

Advantageously, the method further comprises tailors the third sequence of sub-frames of video data based on a characteristic of a target display device.

Advantageously, the method further comprises applying digital rights management operations to at least one of the video data, the metadata, and the third sequence of sub-frames of video data.

Advantageously, the processing circuitry comprising billing management operations to at least one of the video data, the metadata, and the third sequence of sub-frames of video data.

Advantageously, the method further comprises receiving the metadata via a communication link.

Advantageously, the method further comprises receiving the metadata via a removable storage device.

Advantageously, the metadata comprises a metadata file that includes at least one video adjustment parameter associated with at least a portion of the first sequence of sub-frames of video data.

Advantageously, the method further comprises delivering the third sequence of sub-frames of video data for presentation on a target display.

Various features and advantages of the present invention will become apparent from the following detailed description of the invention made with reference to the accompanying drawings.

### BRIEF DESCRIPTION OF THE SEVERAL VIEWS OF THE DRAWING(S)

FIG. 1 is a block diagram illustrating an adaptive video processing system constructed according to an embodiment of the present invention;
FIG. 2 is a system diagram illustrating various embodiments of adaptive video processing systems and sub-frame meta data generation systems constructed according to embodiments of the present invention;
FIG. 3 is a system diagram illustrating a video capture/sub-frame metadata generation system constructed according to an embodiment of the present invention;
FIG. 4 is a diagram illustrating exemplary original video frames and corresponding sub-frames;
FIG. 5 is a diagram illustrating an embodiment of a video processing system display providing a graphical user interface that contains video editing tools for creating sub-frames;
FIG. 6 is a diagram illustrating exemplary original video frames and corresponding sub-frames;
FIG. 7 is a chart illustrating exemplary sub-frame metadata for a sequence of sub-frames;
FIG. 8 is a chart illustrating exemplary sub-frame metadata including editing information for a sub-frame;
FIG. 9 is a schematic block diagram illustrating video processing circuitry according to an embodiment of the present invention;
FIG. 10 is a schematic block diagram illustrating adaptive video processing circuitry constructed and operating according to an embodiment of the present invention;
FIG. 11 is a functional block diagram illustrating a first particular embodiment of an adaptive video processing circuitry constructed and operating according to an embodiment of the present invention;
FIG. 12 is a functional block diagram illustrating a second particular embodiment of an adaptive video processing circuitry constructed and operating according to an embodiment of the present invention;
FIG. 13 is a functional block diagram illustrating a third particular embodiment of an adaptive video processing circuitry constructed and operating according to an embodiment of the present invention;
FIG. 14 is a functional block diagram illustrating a fourth particular embodiment of an adaptive video processing circuitry constructed and operating according to an embodiment of the present invention; and
FIG. 15 is a flow chart illustrating a process for video processing according to an embodiment of the present invention.

### DETAILED DESCRIPTION OF THE INVENTION

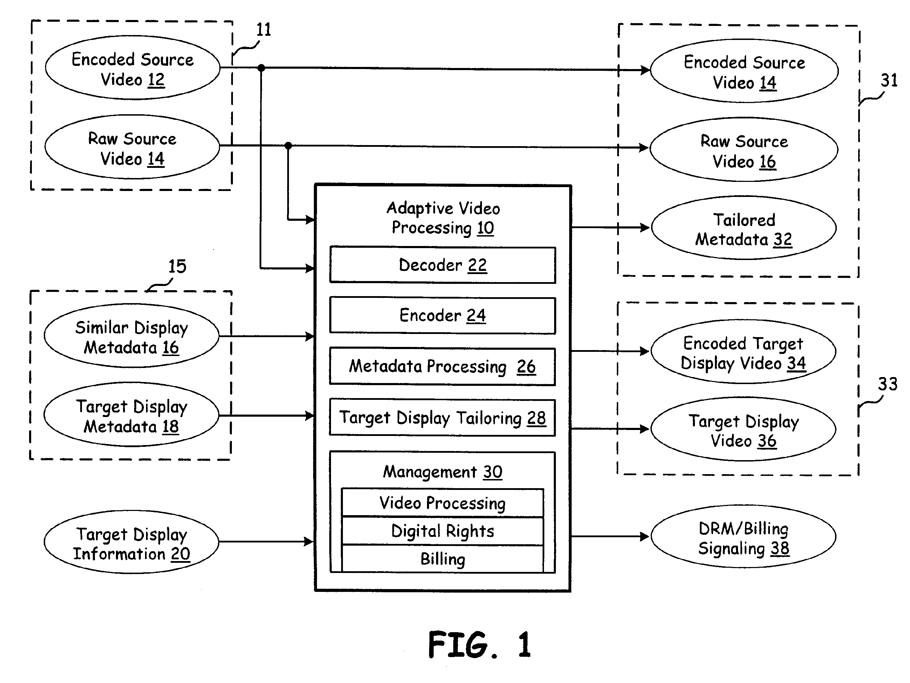

FIG. 1 is a block diagram illustrating an adaptive video processing system constructed according to an embodiment of the present invention. The adaptive video processing system 10 includes a decoder 22, an encoder 24, metadata processing circuitry 26, target display tailoring circuitry 28, and management circuitry 30. The management circuitry 30 includes functionality relating to video processing operations, digital rights management operations, and billing operations. The adaptive video processing circuitry 10 may be one or more of hardware, software, or a combination of hardware and software. In various embodiments, the adaptive video processing circuitry 10 will be a general purpose microprocessor, a special purpose microprocessor, a digital signal processor, an application specific integrated circuit, or other digital logic that is operable to execute software instructions and to process data so that it may accomplish the functions described with reference to FIGs. 1-15.

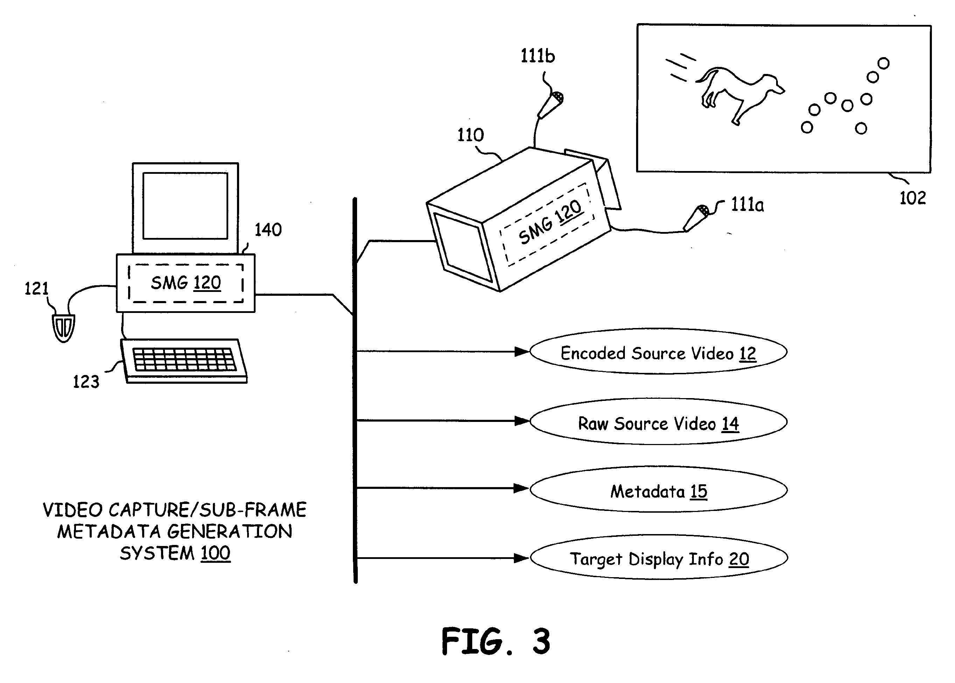

The adaptive video processing circuitry 10 receives one or more of a plurality of inputs and produces one or more of a plurality of outputs. Generally, the adaptive video processing circuitry 10 receives a sequence of full frames of video data 11, metadata 15, and target display information 20. The sequence of full frames of video data 11 may be either encoded source video 12 or raw source video 14. The sequence of full frames of video data are those that may be captured by a video camera or capture system that is further described with reference to FIGS. 3 through 9. The sequence of full frames of video data 11 may be received directly from such a camera or may be received from a storage device such as a server.

The adaptive video processing circuitry 10 may receive the sequence of full frames of video data 11 directly from a camera via a wired or wireless connection or may receive the sequence of full frames of video data 11 from a storage device via a wired or wireless connection. The wired or wireless connection may be serviced by one or a combination of a Wireless Local Area Network (WLAN), a Wide Area Network (WAN), the Internet, a Local Area Network (LAN), a satellite network, a cable network, or a combination of these types of networks. Upon receipt of the sequence of full frames of video data 11, the adaptive video processing circuitry 10 may store the sequence of full frames of video data in memory or may operate immediately upon the sequence of full frames of video data 11 using temporary storage as is required.

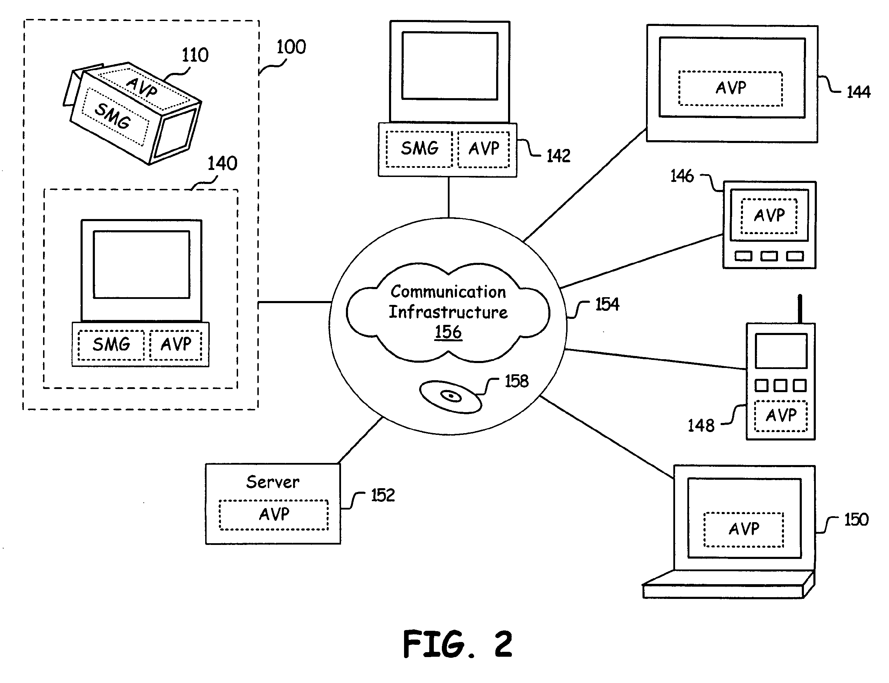

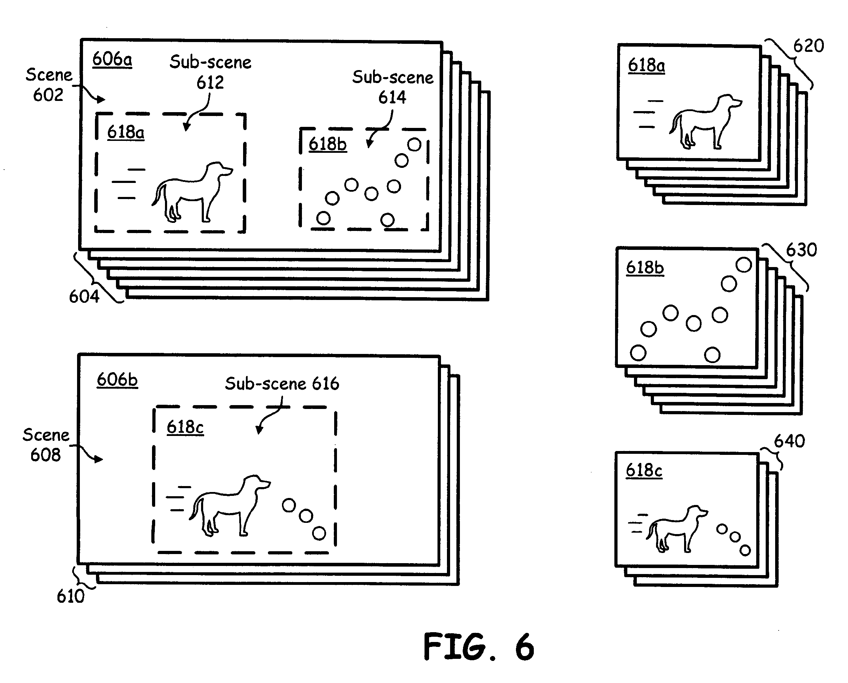

A second input that may be received by the adaptive video processing circuitry 10 is metadata 15. The metadata 15 includes similar display metadata 16 or target display metadata 18. Generally, and as will be further described further herein with reference to FIGS. 2 through 9, the metadata is information that is employed by the adaptive video processing circuitry 10 to modify the sequence of full frames of video data to produce output intended for display on one or more target video devices. The manner in which the metadata 15 is used to modify the sequence of full frames of video data 11 will be described in particular with reference to FIGs. 6 through 15. As evident from titles of the similar display metadata 16 and the target display metadata 18, the particular metadata received by the adaptive video processing circuitry 10 may be particularly directed towards a target display or generally directed toward a group of target displays. For example, the similar display metadata 16 may include particular metadata for a group of similar displays. Such similar displays may have screen resolutions that are common, aspect ratios that are common, and/or other characteristics that are common to the group. The target display metadata 18 corresponds to one particular target display of a target video player. The target display metadata 18 is particularly tailored for use in modifying the sequence of full frames of video data 11 to produce target display video.

An additional input that may be received by the adaptive video processing circuitry 10 is target display information 20. The target display information 20 may include the screen resolution of a target display of a target video player, the aspect ratio of the target display of the target video player, format of information of video data to be received by the target display of the target video player, or other information specific to the target display of the target video player. The adaptive video processing circuitry 10 may use the target display information for further modification of either/both of the sequence of full frames of video data and the metadata 15 for tailoring to a particular target display of a target video player.

In its various operations, the adaptive video processing circuitry 10 produces two types of video outputs as well as digital rights management/billing signals 38. A first type of output 31 includes encoded source video 14, raw source video 16, and tailored metadata 32. The encoded source video 14 is simply fed through by the adaptive video processing circuitry 10 as an output. Likewise, the raw source video 16 is simply fed through by the adaptive video processing circuitry 10 as an output. However, the tailored metadata 32 is processed and created by the adaptive video processing circuitry 10 from one or more of the similar display metadata 16, the target display metadata 18 and the target display information 20. The tailored display metadata 32 is to be used by a target video device having a target display for creating video that is tailored to the target display. The target video player may use the tailored metadata 32 in conjunction with one or more of the encoded source video 14 and the raw source video 16 in creating display information for the target display device.

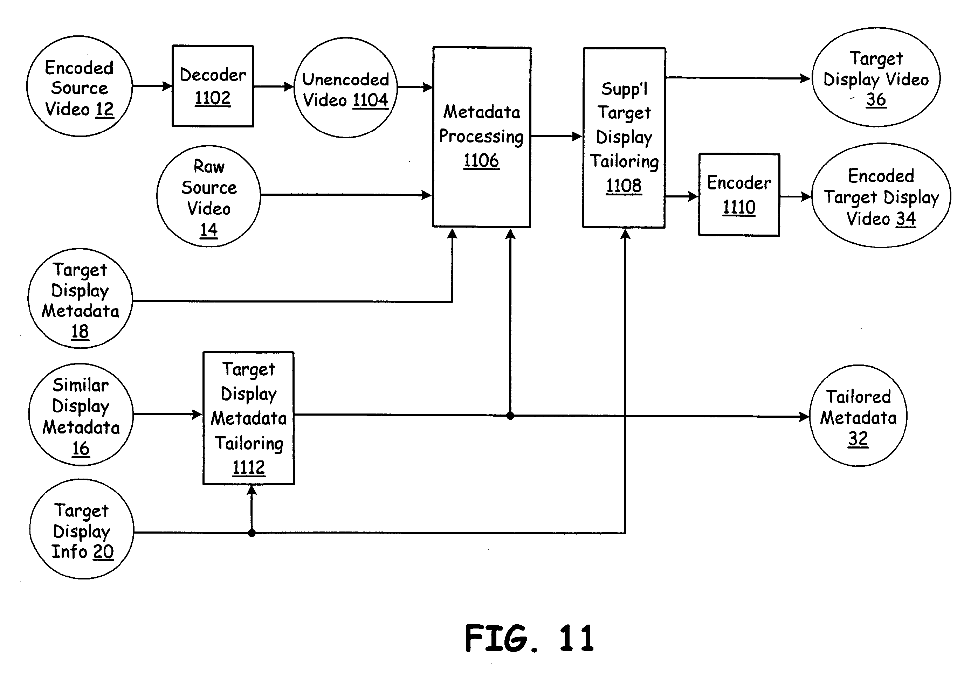

The second type of output produced by the adaptive video processing circuitry 10 is target display video 33 that includes encoded target display video 34 and/or target display video 36. These outputs 34 and 36 are created by adaptive video processing circuitry 10 for presentation upon a target display of a target video player. Each of the encoded target video data 34 and 36 are created based upon the video input 11, metadata 15, and target display information 20. The manner in which the encoded target display video 34 and the target display video 36 are created depends upon particular operations of the adaptive video processing circuitry 10. Some of these particular operations of the adaptive video processing circuitry 10 will be described further herein in respect to FIGs. 11 through 15.

With one example of operation of the adaptive video processing circuitry 10, the adaptive video processing circuitry 10 receives encoded source video 12. The adaptive video processing circuitry 10 then uses the decoder 22 to de-encode the encoded source video 12. The adaptive video processing circuitry 10 then operates upon the de-encoded source video using metadata 15 and/or target display information 20 to create target display video. Then, the adaptive video processing circuitry 10 uses encoder 24 to create the encoded target display video 34. The encoded target display video 34 will be created particularly for presentation on a target display. Thus, either the target display metadata 18 and/or the target display information 20 is used to process the unencoded source video to create target display video that is tailored to a particular target video device and its corresponding target display.

In another example of operation of the adaptive video processing circuitry 10, the adaptive video processing circuitry 10 receives raw source video 14. The raw source video 14 includes a sequence of full frames of video data. The adaptive video processing circuitry 10 applies metadata 15 and/or target display information 32 to create target display video 36. As contrasted to the operation in creating the encoded target display video 34, the adaptive video processing circuitry 10 does not encode the modified video to create the target display video 36.

With another operation of the adaptive video processing circuitry 10 of FIG. 1, the adaptive video processing circuitry 10 receives similar display metadata 16 as well as target display information 20. The similar display metadata 16 received by the adaptive video processing circuitry 10 is not specific to a target display of a target video player. Thus, the adaptive video processing circuitry 10 employs its metadata processing circuitry 26 to modify the similar display metadata 16 based upon the target display information 20 to produce tailored metadata 32.

In another operation of the adaptive video processing circuitry 10 of FIG. 1, target display tailoring circuitry 28 is employed to create one or more of the encoded target display video 34 and the target display video 36. The target display tailoring display circuitry 28 uses the target display information 20 to further modify frames of data such that the output 33 is specifically tailored for the target display of the target video player.

The management circuitry 30 of the adaptive video processing circuitry 10 performs video processing management operations to create the target display video 33 or the tailored metadata 32. The digital rights circuitry of the management circuitry 30 on the adaptive video processing circuitry 10 executes its operations to perform digital rights managements for not only the incoming source video 11 and the incoming metadata 15 but also for the outputs 31 and 33. The digital rights management circuitry of management circuitry 30 may operate in conjunction with a remote server or other devices to ensure that the operations upon the source video that include the full frames of video data are licensed.

The billing operations of the management circuitry 30 operate to initiate the billing of a subscriber for the operations performed by the adaptive video processing circuitry 10. For example, a user of a target video device requests the adaptive video processing circuitry 10 to prepare target display video 36 from raw source video 14. The management circuitry 30 would first determine whether the subscriber has rights to access the raw source video 14, metadata 15, and target display information 20 that is to be used to create the target display video 36. After digital rights management operations have been performed to determine that the subscriber has rights to access the source video 14, the management circuitry 30 then initiates billing operations. These billing operations cause the subscriber to be billed or otherwise notified if any costs are to be accessed.

The adaptive video processing circuitry 10 may be initiated by hardware, software, or a combination of hardware and software. The adaptive video processing circuitry 10 may be implemented as a software application on a personal computer, a server compute, a set top box, or another device. Other/additional operations the adaptive video processing circuitry 10 of FIG. 1 will be described further with reference to FIGs. 2 through 15.

FIG. 2 is a system diagram illustrating various embodiments of adaptive video processing systems and sub-frame meta data generation systems constructed according to embodiments of the present invention. Referring now to FIG. 2, an infrastructure that includes adaptive video processing (AVP) system and sub-frame metadata generation (SMG) system is described. Generally, the SMG system and AVP system may be distributed amongst one, two, or more than two components within a communication infrastructure.

A sub-frame metadata generation system 100 includes one or both of a camera 110 and a computing system 140. The camera 110 as will be further described with reference to FIGs. 3 through 9 captures an original of sequence of full frames of video data. Then, the computing system 140 and/or the camera 110 generate metadata based upon sub-frames identified by user input. The sub-frames based identified by user input are employed to indicate what sub-portions of scenes represented in the full frames video data are to be employed in creating video specific to target video players. These target video players may include video players 144, 146, 148, and 150.

The AVG system illustrated in FIG. 2 is employed to create a sequence of sub frames of video data from the full frames of video data and metadata that is generated by the SMG system. The AVG system and/or the SMG system of the capture system 100 may be stored on server 152, or within any of the digital computer 142 or video displays 144, 146, 148, and/or 150. With the metadata and source video stored within the system of FIG. 2, AVP may be later performed. Alternatively, the AVP may be performed immediately after capture of the source video by camera 110 and creation of metadata by the SMG application of camera 110, computing system 140, and/or computing system 142.

Communication system 154 includes one or more of the communication infrastructure 156 and/or a physical media 158. The communication infrastructure 156 supports the exchange of the source video 11, metadata 15, target display information 20, output 31, display video 33, and the DRM/ billing signaling 38 previously described with reference to FIG. 1. As is shown, the communication infrastructure 156 may include the Internet and other data networks. Alternatively, the video data and other inputs and outputs may be written to a physical media 158 and distributed via the physical media 158. The physical media 158 may be rented in a video rental store to subscribers that use the physical media 158 within a physical media video player.

The adaptive video processing operations of the present invention that will be described further herein operate upon full frames of video data using metadata and other inputs to create target video data for presentation on the video players 144, 146, 148, and/or 150. The video data 11, metadata 15, and target video display information 20 that is used to create the target display video for the players 144, 146, 148, and 150 may be received from a single source or from multiple sources. For example, the server 152 may store metadata 15 while the source video 11 may be stored at a different location. Alternatively, all of the source video 11, the metadata 15, and the target display information 20 may be stored on server 152 or another single device.

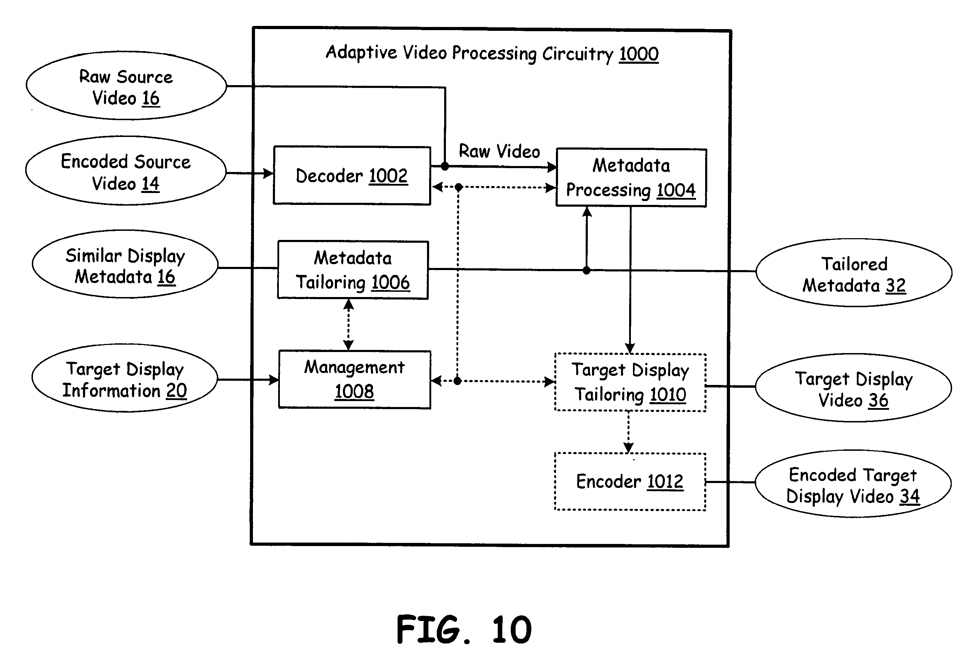

The adaptive video processing operations of the present invention may be performed by one or more of the computing system 142, camera 110, computing system 140, displays 144, 146, 148 and/ or 150 and server 152. These operations, as will be subsequently described with reference to FIGs. 10 through 15, create the target display video for a particular target video player.

FIG. 3 is a system diagram illustrating a video capture/sub-frame metadata generation system constructed according to an embodiment of the present invention. The video capture/sub-frame metadata system 100 of FIG. 3 includes a camera 110 and an SMG system 120. The video camera 110 captures an original sequence of full frames of video data relating to scene 102. The video camera 110 may also capture audio via microphones 111A and 111B. The video camera 110 may provide the full frames of video data to console 140 or may execute the SMG system 120. The SMG system 120 of the video camera 110 or console 140 receives input from a user via user input device 121 or 123. Based upon this user input, the SMG system 120 displays one or more sub frames upon a video display that also illustrates the sequence of full frames of video data. Based upon the sub frames created from user input and additional information, the SMG system 120 creates metadata 15. The video data output of the video capture/sub frame metadata generation system 100 is one or more of the encoded source video 12 or raw source video 14. The video capture/sub frame metadata generation 100 also outputs metadata 15 that may be similar display metadata 16 and/or target display metadata 18. The video capture/sub-frame metadata generation system100 may also output target display information 20.

The sequence of original video frames captured by the video camera 110 is of scene 102. The scene 102 may be any type of a scene that is captured by a video camera 110. For example, the scene 102 may be that of a landscape having a relatively large capture area with great detail. Alternatively, the scene 102 may be head shots of actors having dialog with each other. Further, the scene 102 may be an action scene of a dog chasing a ball. The scene 102 type typically changes from time to time during capture of original video frames.

With prior video capture systems, a user operates the camera 110 to capture original video frames of the scene 102 that were optimized for a "big-screen" format. With the present invention, the original video frames will be later converted for eventual presentation by target video players having respective video displays. Because the sub-frame metadata generation system 120 captures differing types of scenes over time, the manner in which the captured video is converted to create sub-frames for viewing on the target video players also changes over time. The "big-screen" format does not always translate well to smaller screen types. Therefore, the sub-frame metadata generation system 120 of the present invention supports the capture of original video frames that, upon conversion to smaller formats, provide high quality video sub-frames for display on one or more video displays of target video players.

The encoded source video 12 may be encoded using one or more of a discrete cosine transform (DCT)-based encoding/compression formats (e.g., MPEG-1, MPEG-2, MPEG-2-enhanced for HD, MPEG-4 AVC, H.261 and H.263), motion vectors are used to construct frame or field-based predictions from neighboring frames or fields by taking into account the inter-frame or inter-field motion that is typically present. As an example, when using an MPEG coding standard, a sequence of original video frames is encoded as a sequence of three different types of frames: "I" frames, "B" frames and "P" frames. "I" frames are intra-coded, while "P" frames and "B" frames are inter-coded. Thus, 1-frames are independent, i.e., they can be reconstructed without reference to any other frame, while P-frames and B-frames are dependent, i.e., they depend upon another frame for reconstruction. More specifically, P-frames are forward predicted from the last I-frame or P-frame and B-frames are both forward predicted and backward predicted from the last/next 1-frame or P-frame. The sequence of IPB frames is compressed utilizing the DCT to transform NxN blocks of pixel data in an "I", "P" or "B" frame, where N is usually set to 8, into the DCT domain where quantization is more readily performed. Run-length encoding and entropy encoding are then applied to the quantized bitstream to produce a compressed bitstream which has a significantly reduced bit rate than the original uncompressed video data.

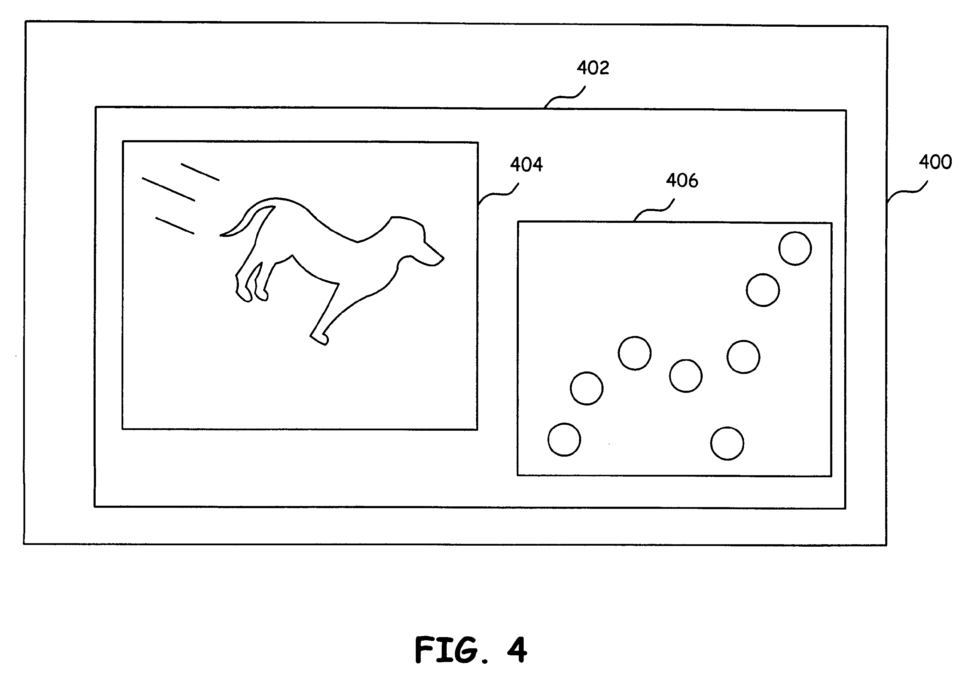

FIG. 4 is a diagram illustrating exemplary original video frames and corresponding sub-frames. As is shown, the video display 400 has a viewing area that displays the sequence of original video frames representing the scene 102 of FIG. 3. According to the embodiment of FIG. 4, the SMG system 120 is further operable to respond to additional signals representing user input by presenting, in addition to sub-frame 402, additional sub-frames 404 and 406 on the video display 400 in association with the sequence of original video frames. Each of these sub-frames 402 would have an aspect ratio and size corresponding to one of a plurality of target video displays. Further, the SMG system 120 produces metadata 15 associated with each of these sub-frames 402, 404, and 406. The metadata 15 that the sub-frame metadata generation system 120 generates that is associated with the plurality of sub-frames 402, 404, and 406 enables a corresponding target video display to produce a corresponding presentation on its video display. In the example of FIG. 4, the SMG system 120 includes a single video display 400 upon which each of the plurality of sub-frames 402, 404, and 406 are displayed. In another embodiment, each of the plurality of sub-frames generated by the video processing system may be independently displayed on a corresponding target video player.

With the example of FIG. 4, at least two of the sub-frames 404 and 406 of the set of sub-frames may correspond to a single frame of the sequence of original video frames. Thus, for example, with a particular target video player, sub-frames 404 and 406 and the related video information contained therein may be presented at differing times on a single target video player. With the example of FIG. 4, a first portion of video presented by the target video player may show a dog chasing a ball as contained in sub-frame 404 while a second portion of video presented by the target video player shows the bouncing ball as it is illustrated in sub-frame 406. Thus, with this example, video sequences of a target video player that are adjacent in time are created from a single sequence of original video frames.

Further, with the example of FIG. 4, at least two sub-frames of the set of sub-frames may include an object whose spatial position varies over the sequence of original video frames. In such frames, the spatial position of the sub-frame 404 that identifies the dog would vary over the sequence of original video frames with respect to the sub-frame 406 that indicates the bouncing ball. Further, with the example of FIG. 4, two sub-frames of the set of sub-frames may correspond to at least two different frames of the sequence of original video frames. With this example, sub-frames 404 and 406 may correspond to differing frames of the sequence of original video frames displayed on the video display 400. With this example, during a first time period, sub-frame 404 is selected to display an image of the dog over a period of time. Further, with this example, sub-frames 406 would correspond to a different time period to show the bouncing ball. With this example, at least a portion of the set of sub-frames 404 and 406 may correspond to a sub-scene of a scene depicted across the sequence of original video frames. This sequence depicted may be depicted across the complete display 400 or sub-frame 402.

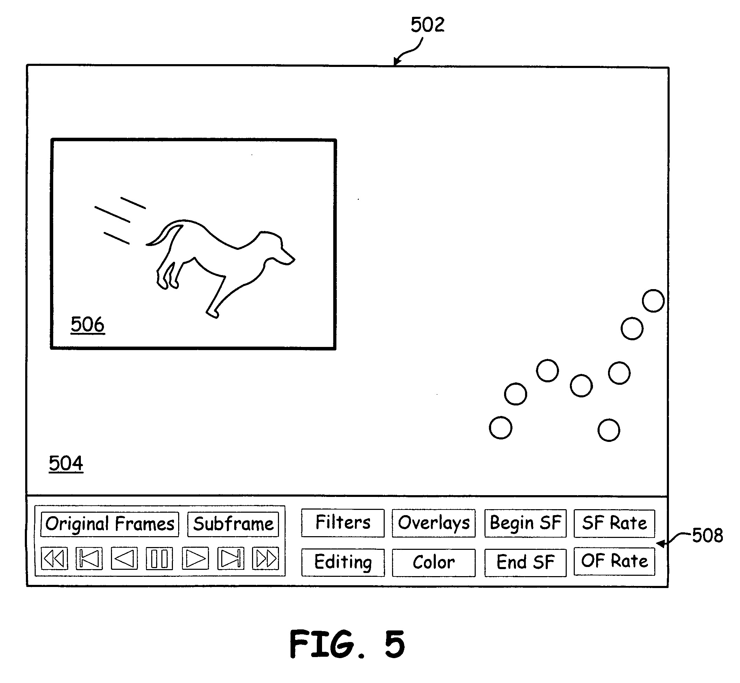

FIG. 5 is a diagram illustrating an embodiment of a video processing system display providing a graphical user interface that contains video editing tools for creating sub-frames. On the video processing display 502 is displayed a current frame 504 and a sub-frame 506 of the current frame 504. The sub-frame 506 includes video data within a region of interest identified by a user. Once the sub-frame 506 has been identified, the user may edit the sub-frame 506 using one or more video editing tools provided to the user via the GUI 508. For example, as shown in FIG. 5, the user may apply filters, color correction, overlays, or other editing tools to the sub-frame 506 by clicking on or otherwise selecting one of the editing tools within the GUI 508. In addition, the GUI 508 may further enable the user to move between original frames and/or sub-frames to view and compare the sequence of original sub-frames to the sequence of sub-frames.

FIG. 6 is a diagram illustrating exemplary original video frames and corresponding sub-frames. In FIG. 6, a first scene 602 is depicted across a first sequence 604 of original video frames 606 and a second scene 608 is depicted across a second sequence 610 of original video frames 606. Thus, each scene 602 and 608 includes a respective sequence 604 and 610 of original video frames 606, and is viewed by sequentially displaying each of the original video frames 606 in the respective sequence 604 and 610 of original video frames 606.

However, to display each of the scenes 602 and 608 on a small video display without reducing the viewer's perceived video quality, each of the scenes 602 and 608 can be divided into sub-scenes that are separately displayed. For example, as shown in FIG. 6, within the first scene 602, there are two sub-scenes 612 and 614, and within the second scene 608, there is one sub-scene 616. Just as each scene 602 and 608 may be viewed by sequentially displaying a respective sequence 604 and 610 of original video frames 606, each sub-scene 612, 614, and 616 may also be viewed by displaying a respective sequence of sub-frames 618 (618a, 618b, and 618c).

For example, looking at the first frame 606a within the first sequence 604 of original video frames, a user can identify two sub-frames 618a and 618b, each containing video data representing a different sub-scene 612 and 614. Assuming the sub-scenes 612 and 614 continue throughout the first sequence 604 of original video frames 606, the user can further identify two sub-frames 618a and 618b, one for each sub-scene 612 and 614, respectively, in each of the subsequent original video frames 606a in the first sequence 604 of original video frames 606. The result is a first sequence 620 of sub-frames 618a, in which each of the sub-frames 618a in the first sequence 620 of sub-frames 618a contains video content representing sub-scene 612, and a second sequence 630 of sub-frames 618b, in which each of the sub-frames 618b in the second sequence 630 of sub-frames 618b contains video content representing sub-scene 614. Each sequence 620 and 630 of sub-frames 618a and 618b can be sequentially displayed. For example, all sub-frames 618a corresponding to the first sub-scene 612 can be displayed sequentially followed by the sequential display of all sub-frames 618b of sequence 630 corresponding to the second sub-scene 614. In this way, the movie retains the logical flow of the scene 602, while allowing a viewer to perceive small details in the scene 602.

Likewise, looking at the first frame 606b within the second sequence 610 of original video frames 606, a user can identify a sub-frame 618c corresponding to sub-scene 616. Again, assuming the sub-scene 616 continues throughout the second sequence 610 of original video frames 606, the user can further identify the sub-frame 618c containing the sub-scene 616 in each of the subsequent original video frames 606 in the second sequence 610 of original video frames 606. The result is a sequence 640 of sub-frames 618c, in which each of the sub-frames 618c in the sequence 640 of sub-frames 618c contains video content representing sub-scene 616.

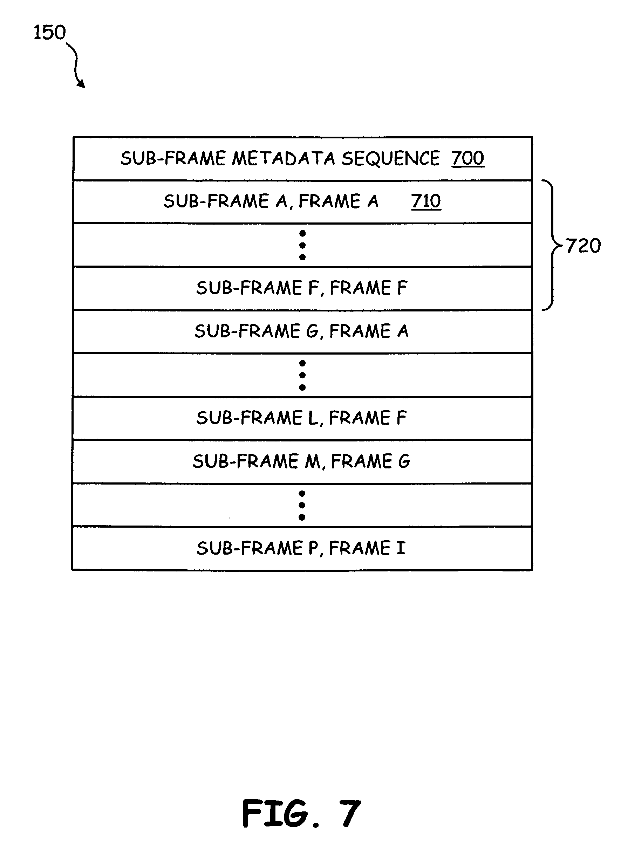

FIG. 7 is a chart illustrating exemplary sub-frame metadata for a sequence of sub-frames. Within the sub-frame metadata 150 shown in FIG. 7 is sequencing metadata 700 that indicates the sequence (i.e., order of display) of the sub-frames. For example, the sequencing metadata 700 can identify a sequence of sub-scenes and a sequence of sub-frames for each sub-scene. Using the example shown in FIG. 7, the sequencing metadata 700 can be divided into groups 720 of sub-frame metadata 150, with each group 720 corresponding to a particular sub-scene.

For example, in the first group 720, the sequencing metadata 700 begins with the first sub-frame (e.g., sub-frame 618a) in the first sequence (e.g., sequence 620) of sub-frames, followed by each additional sub-frame in the first sequence 620. In FIG. 7, the first sub-frame in the first sequence is labeled sub-frame A of original video frame A and the last sub-frame in the first sequence is labeled sub-frame F of original video frame F. After the last sub-frame in the first sequence 620, the sequencing metadata 700 continues with the second group 720, which begins with the first sub-frame (e.g., sub-frame 618b) in the second sequence (e.g., sequence 630) of sub-frames and ends with the last sub-frame in the second sequence 630. In FIG. 7, the first sub-frame in the second sequence is labeled sub-frame G of original video frame A and the last sub-frame in the first sequence is labeled sub-frame L of original video frame F. The final group 720 begins with the first sub-frame (e.g., sub-frame 618c) in the third sequence (e.g., sequence 640) of sub-frames and ends with the last sub-frame in the third sequence 640. In FIG. 7, the first sub-frame in the first sequence is labeled sub-frame M of original video frame G and the last sub-frame in the first sequence is labeled sub-frame P of original video frame I.

Within each group 720 is the sub-frame metadata for each individual sub-frame in the group 720. For example, the first group 720 includes the sub-frame metadata 150 for each of the sub-frames in the first sequence 620 of sub-frames. In an exemplary embodiment, the sub-frame metadata 150 can be organized as a metadata text file containing a number of entries 710. Each entry 710 in the metadata text file includes the sub-frame metadata 150 for a particular sub-frame. Thus, each entry 710 in the metadata text file includes a sub-frame identifier identifying the particular sub-frame associated with the metadata and references one of the frames in the sequence of original video frames.

Examples of editing information include, but are not limited to, a pan direction and pan rate, a zoom rate, a contrast adjustment, a brightness adjustment, a filter parameter, and a video effect parameter. More specifically, associated with a sub-frame, there are several types of editing information that may be applied including those related to: a) visual modification, e.g., brightness, filtering, video effects, contrast and tint adjustments; b) motion information, e.g., panning, acceleration, velocity, direction of sub-frame movement over a sequence of original frames; c) resizing information, e.g., zooming (including zoom in, out and rate) of a sub-frame over a sequence of original frames; and d) supplemental media of any type to be associated, combined or overlaid with those portions of the original video data that falls within the sub-frame (e.g., a text or graphic overlay or supplemental audio.

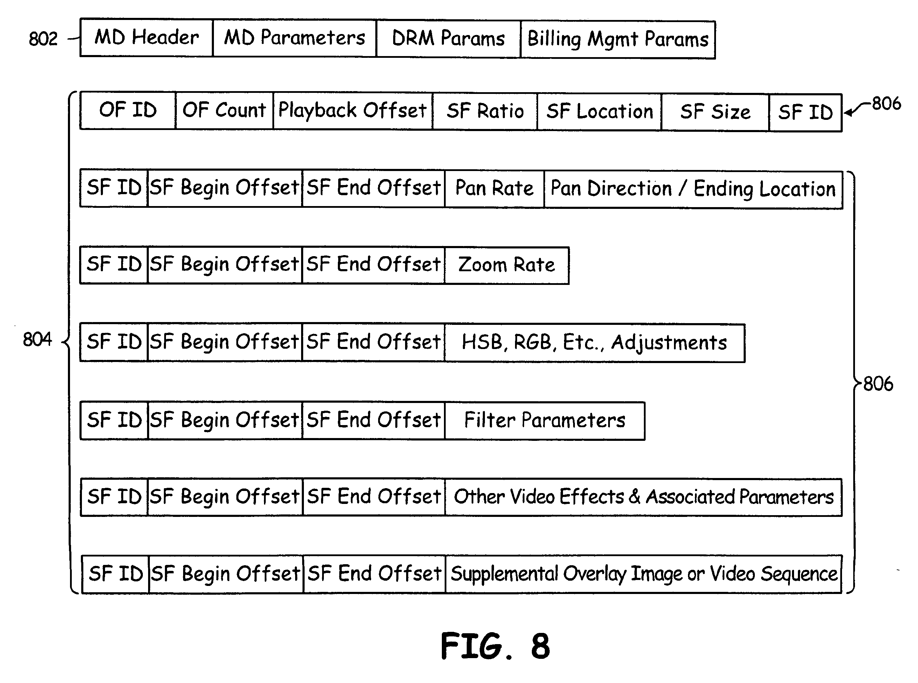

FIG. 8 is a chart illustrating exemplary sub-frame metadata including editing information for a sub-frame. The sub-frame metadata includes a metadata header 802. The metadata header 802 includes metadata parameters, digital rights management parameters, and billing management parameters. The metadata parameters include information regarding the metadata, such as date of creation, date of expiration, creator identification, target video device category/categories, target video device class(es), source video information, and other information that relates generally to all of the metadata. The digital rights management component of the metadata header 802 includes information that is used to determine whether, and to what extent the sub-frame metadata may be used. The billing management parameters of the metadata header 802 include information that may be used to initiate billing operations incurred upon use the metadata.

Sub-frame metadata is found in an entry 804 of the metadata text file. The sub-frame metadata 150 for each sub-frame includes general sub-frame information 806, such as the sub-frame identifier (SF ID) assigned to that sub-frame, information associated with the original video frame (OF ID, OF Count, Playback Offset) from which the sub-frame is taken, the sub-frame location and size (SF Location, SF Size) and the aspect ratio (SF Ratio) of the display on which the sub-frame is to be displayed. In addition, as shown in FIG. 8, the sub-frame information 804 for a particular sub-frame may include editing information 806 for use in editing the sub-frame. Examples of editing information 806 shown in FIG. 8 include a pan direction and pan rate, a zoom rate, a color adjustment, a filter parameter, a supplemental over image or video sequence and other video effects and associated parameters.

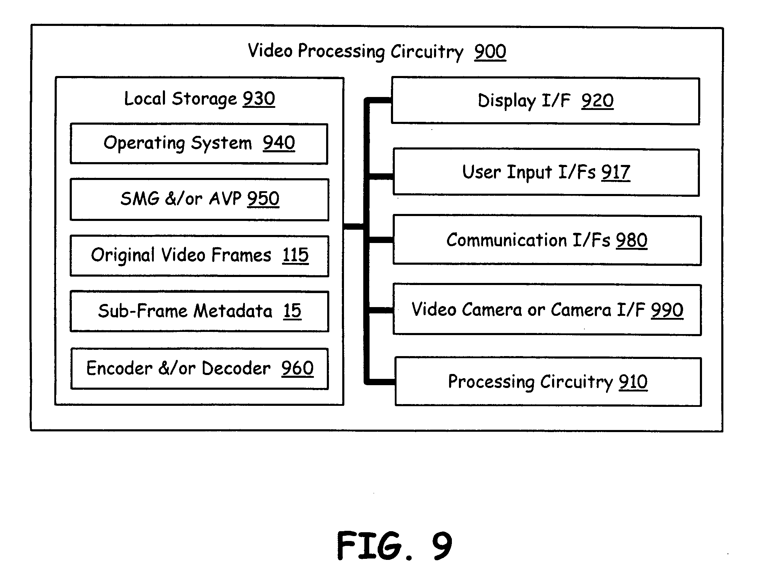

FIG. 9 is a schematic block diagram illustrating video processing circuitry according to an embodiment of the present invention. The video processing circuitry 900 supports the SMG or AVP systems of the present invention that were previously described with reference to FIGs. 1 through 8. Video processing circuitry 900 includes processing circuitry 910 and local storage 930 that together store and execute software instructions and process data. Processing circuitry 910 may be a micro processor, a digital signal processor, an application specific integrated circuitry, or another type of circuitry that is operable to process data and execute software operations. Local storage 930 is one or more of random access memory, read only memory, a hard disk drive, an optical drive, and/or other storage capable of storing data and software programs.

The video processing circuitry 900 further includes a display interface 920, one or more user interfaces 917, one or more output interfaces 980, and a video camera/camera interface 990. When executing the SMG system, the video processing circuitry 900 includes a camera and/or a video camera interface. The video processing system 900 receives a sequence of full frames of video data. When the video camera is included with the video processing circuitry 900, the video camera captures the sequence of full frames video data. The sequence of full frames of video data are stored in local storage 930 as original video frames 115. The display interface 920 couples to one or more displays serviced directly by the video processing circuitry 900. The user input interface 917 couples to one or more user input devices such as a keyboard, a mouse or another user input device. The communication interface(s) 980 may couple to a data network, to a DVD writer, or to another communication link that allows information to be brought into the video processing circuitry 900 and written from the video processing circuitry 900.

The local storage 930 stores an operating system 940 that is executable by the processing circuitry 910. Likewise, local storage 930 stores software instructions that enable the SMG functionality and/or the AVP functionality 950. Upon execution of the SMG and/or AVP software instructions 950, by the processing circuitry 910, video processing circuitry 900 executes the operations of the SMG functionality and/or AVP functionality.

Video processing circuitry 900 may also store sub-frame metadata 150 after its creation or during its creation. When the video processing circuitry 900 executes the SMG system, the video processing circuitry 900 creates the metadata 15 and stores it in local storage as sub-frame metadata 150. When the video processing circuitry 900 executes the AVP system, the video processing circuitry 900 may receive the sub-frame metadata 15 via the communication interface 980 for subsequent use in processing source video 11 that is also received via communication interface 980. The video processing circuitry 900 also stores in local storage 930 software instructions that upon execution enable encoder and/or decoder operations 960. The manner in which the video processing circuitry 900 executes the SMG and/or AVP system is described with reference to FIGs. 1 through 8 and FIGs. 10 through 15.

Referring now to all of FIGs. 1, 3, 4, and 9, in one particular operation, the processing circuitry 910 applies decoding and sub-frame processing operations to encoded video 14 to generate both a first sequence of sub-frames of video data and a second sequence of sub-frames of video data. The first sequence of sub-frames of video data corresponds to a different region within the sequence of full frames of video data than that of the second sequence of sub-frames of video data. Further, the processing circuitry 910 generates a third sequence of sub-frames of video data by combining the first sequence of sub-frames of video data with the second sequence of sub-frames of video data.

The processing circuitry 910 may encode the third sequence of sub-frames of video data. The decoding and sub-frame processing may be applied by the processing circuitry 910 in sequence. The decoding and sub-frame processing applied by the processing circuitry 910 may be integrated. The processing circuitry may carry out the sub-frame processing pursuant to sub-frame metadata 15. The processing circuitry 910 may tailor the sub-frame metadata based on a characteristic of a target display device before carrying out the sub-frame processing. The processing circuitry 910 may tailor the third sequence of sub-frames of video data based on a characteristic of a target display device.

According to another operation, the processing circuitry 910 applies sub-frame processing to video to generate both a first sequence of sub-frames of video data and a second sequence of sub-frames of video data. The first sequence of sub-frames of video data re defined by at least a first parameter and the second sequence of sub-frames of video data are defined by at least a second parameter. Both the at least the first parameter and the at least the second parameter together are metadata. The processing circuitry 910 receives the metadata for the sub-frame processing and generates a third sequence of sub-frames of video data by combining the first sequence of sub-frames of video data with the second sequence of sub-frames of video data. The third sequence of sub-frames of video data may be delivered for presentation on a target display. The processing circuitry 910 may tailor the metadata before performing the sub-frame processing. The processing circuitry 910 may adapt the third sequence of sub-frames of video data for presentation on a target display.

FIG. 10 is a schematic block diagram illustrating adaptive video processing circuitry constructed and operating according to an embodiment of the present invention. A particular implementation of the adaptive processing circuitry 1000 of the present invention is shown. The adaptive processing circuitry 1000 includes a decoder 1002, metadata processing circuitry 1004, metadata tailoring circuitry 1006, and management circuitry 1008. The adaptive processing circuitry 1000 may also include target display tailoring circuitry 1010 and an encoder 1012. The adaptive processing circuitry 1000 receives raw source video 16, encoded source video 14, similar display metadata 16, and/or target display information 20.

The decoder 1002 of the adaptive video processing circuitry 1000 receives the encoded source video 14 and de-encodes the encoded source video 14 to produce raw video. Alternatively, the raw source video 16 received by the adaptive video processing circuitry is provided directly as raw video within the adaptive video processing circuitry 1000. Metadata tailoring circuitry 1006 receives the similar display metadata 16 while management circuitry receives target display information 20.

In its operations, the metadata processing circuitry 1004 operates upon raw video and metadata 15 to produce output to target display tailoring circuitry 1010. Metadata tailoring circuitry 1006 receives similar display metadata 16 and, based upon interface data received from management circuitry 1008, produces tailored metadata 32. The management circuitry 1008 receives the target display information 20 and produces output to one or more of the metadata tailoring circuitry 1006, the decoder 1002, the metadata processing circuitry 1004, and the target display tailoring circuitry 1010. The metadata processing circuitry 1004, based upon tailored metadata 32 received from metadata tailoring circuitry 1006, processes the raw video to produce an output that may be further tailored by the target display tailoring circuitry 1010 to produce target display video 36. The target display video 36 may be encoded by the encoder 1012 to produce the encoded target display video 34.

Each of the components of the adaptive processing circuitry 1000 of FIG. 10 may have its operation based upon any and all of the inputs it receives. For example, decoder 1002 may tailor its operations to encode the encoded source video 14 based upon information received by management circuitry 1008. This processing may be based upon the target display information 20. Further, the metadata tailoring circuitry 1006 may modify the similar display metadata 16, based upon information received from management circuitry 1008, to produce the tailored metadata 32. The information received from management circuitry 1008 by the metadata tailoring circuitry 1006 is based upon target display information 20. The similar display metadata 16 may correspond to a group or classification of target displays having similar properties. However, the adaptive processing circuitry 1000 desires to produce tailored metadata 32 respective to a particular target display. Thus, the metadata tailoring circuitry 1006 modifies the similar display metadata 16 based upon the target display information 20 and related information produced by management circuitry 1008 to modify the similar display metadata 16 to produce the tailored metadata 32.

The metadata processing circuitry 1004 may modify the raw video to produce display video based upon the similar display metadata 16. Alternatively, the metadata processing circuitry 1004 processes the raw video to produce an output based upon the tailored metadata 32. However, the metadata processing circuitry 1004 may not produce display video in a final form. Thus, the target display tailoring circuitry 1010 may use the additional information provided to it by management circuitry 1008 (based upon the target display information 20) to further tailor the display video to produce the target display video 36. The tailoring performed by the target display tailoring circuitry 1010 is also represented in the encoded target display video 34 produced by encoder 1012.

FIG. 11 is a functional block diagram illustrating a first particular embodiment of an adaptive video processing circuitry constructed and operating according to an embodiment of the present invention. With this embodiment, decoder 1102 receives encoded source video 12 to produce un-encoded video 1104. The metadata processing circuitry 1106 receives the un-encoded video 1104 or raw source video 14. Based upon target display metadata 18, the metadata processing circuitry 1106 processes the un-encoded video 1104 of the raw source video 14 to produce output video data. The metadata processing circuitry 1106 may further receive input from target display metadata tailoring circuitry 1112. The target display metadata tailoring circuitry 1112 receives similar display metadata 16 and target display information 20. Based upon the similar display metadata 16 and the target display information 20, the target display metadata tailoring circuitry 1112 produces tailored metadata 32. Thus, the metadata processing circuitry 1106 uses one or both of the target display metadata 18 and the tailored metadata 32 to process its input video to produce its output.

The output of the metadata processing circuitry 1106 however may not be sufficiently processed for a target display of a target video player. Thus, the supplemental target display tailoring circuitry 1108 receives the output of metadata processing circuitry 1106 and further processes its input video based upon target display information 20 to produce target display video 36. The target display video 36 is particularly tailored to a target display of a target video player. The encoder 1110 also receives output from the supplemental target display tailoring circuitry 1108, encodes such output, and produce encoded target display video 34. The encoded target display video 34 is encoded in a manner consistent with the format of the video data received by the target video player. The target video player receives the encoded target video 34 and presents a video image on its display based upon such video 34.

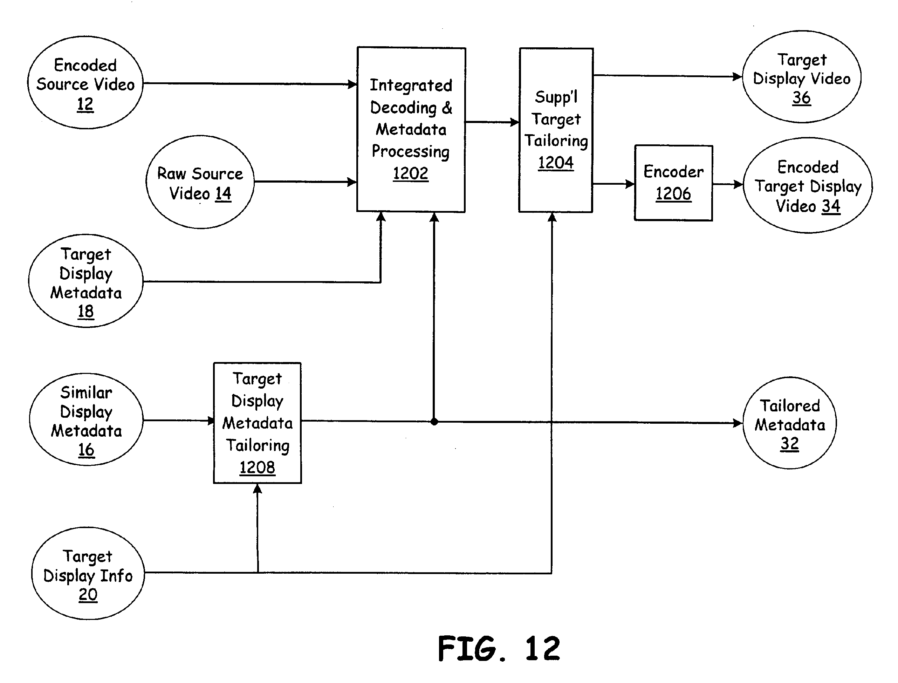

FIG. 12 is a functional block diagram illustrating a second particular embodiment of an adaptive video processing circuitry constructed and operating according to an embodiment of the present invention. As contrasted to the structure of FIG. 11, integrated decoding and metadata processing circuitry 1202 receives encoded source video 12, raw source video 14, target display metadata 18, and the tailored metadata 32 from target display metadata tailoring circuitry 1208. The target display metadata tailoring circuitry 1208 produces the tailored metadata 32 based upon similar display metadata 16 and target display information 20.

The integrated decoding and metadata processing circuitry 1202, processes its inputs to produce display video as its output. Not all inputs to the integrated decoding and metadata processing circuitry 1202 may be present at any time. For example, when the encoded source video 12 is present, integrated decoding and metadata processing circuitry 1202 decodes the encoded source video 12 and then processes the un-encoded source video using target display metadata 18 and/or tailored metadata 32 to produce its video output. Of course, when the integrated decoding and metadata processing circuitry 1202 receives raw source video 14 it need not un-encode the raw source video 14 prior to performing its metadata processing operations.

The output of integrated decoding and metadata processing circuitry 1202 is received by the supplemental target tailoring circuitry 1204. The supplemental target tailoring circuitry 1204 also receives target display information 20. The supplemental target tailoring circuitry 1204 processes the video data it receives from the integrated decoding and metadata processing circuitry 1202 based upon the target display information 20 to produce target display video 36. Alternately, the supplemental target tailoring circuitry 1204 produces output to an encoder 1206, which encodes its input to produce encoded target display video 34. Each of target display video 36 and encoded target display video 34 are specific to a particular target display of a target video player.

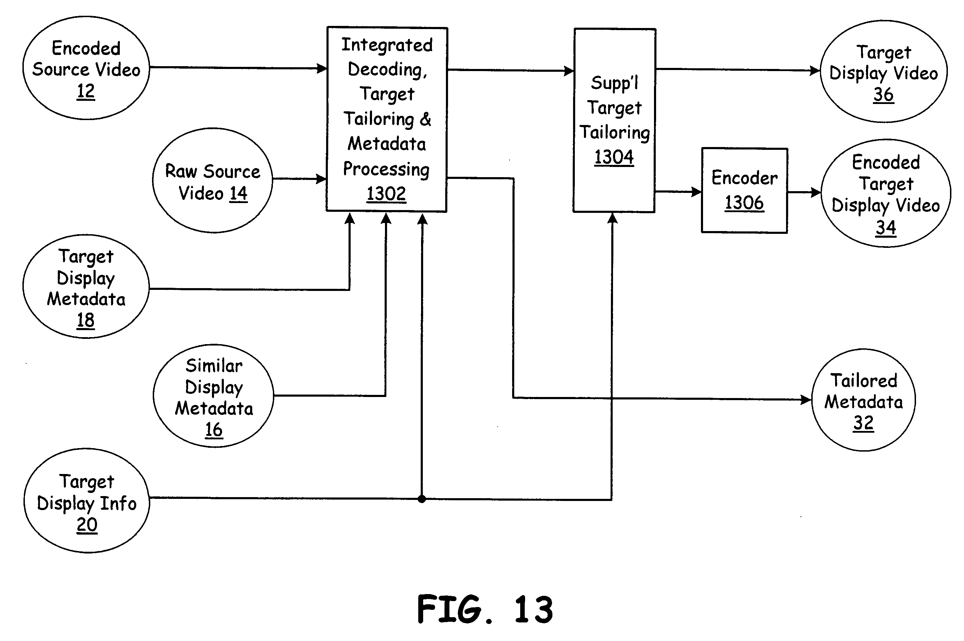

FIG. 13 is a functional block diagram illustrating a third particular embodiment of an adaptive video processing circuitry constructed and operating according to an embodiment of the present invention. With the structure of FIG. 13, integrated decoding, target tailoring and metadata processing circuitry 1304 receives encoded source video 12, raw source video 14, target display metadata 18, similar display metadata 16, and target display information 20. Based upon the signals it receives that are valid and present, the integrated decoding, target tailoring, and metadata processing circuitry 1302 performs one or more of decoding operations, target tailoring operations, and metadata processing operations to produce video data to the supplemental target tailoring circuitry 1304 and/or tailored metadata 32.

The supplemental target tailoring circuitry 1304 receives the output of the integrated decoding, target tailoring and metadata processing circuitry 1304 and target display information 20. Based upon its inputs, the supplemental target tailoring circuitry 1304 produces target display video 36, and/or an output to encoder 1306. The encoder 1306 receives its input from supplemental target tailoring circuitry 1304 and produces encoded target display video 34.

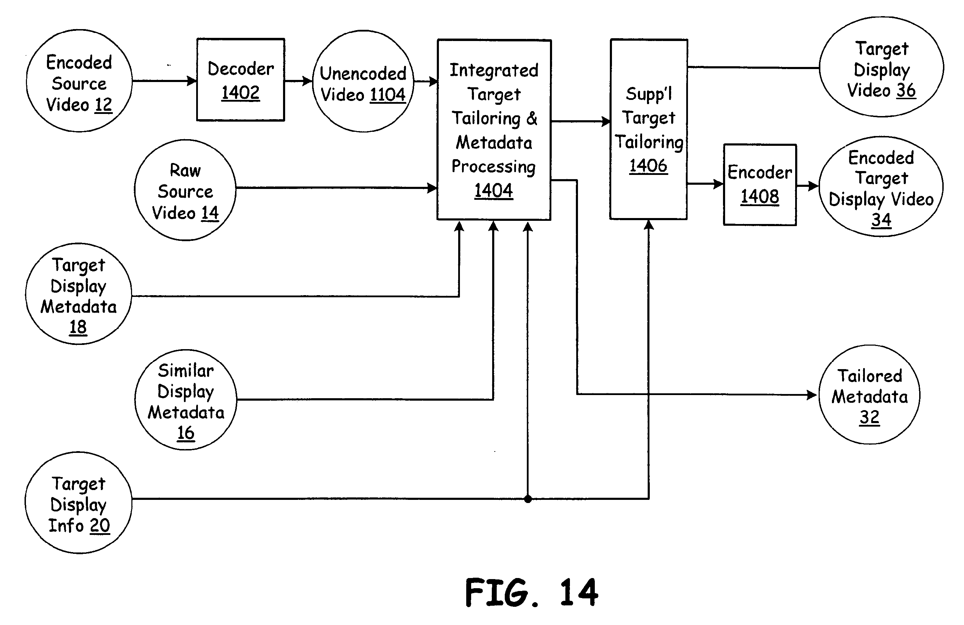

FIG. 14 is a functional block diagram illustrating a fourth particular embodiment of an adaptive video processing circuitry constructed and operating according to an embodiment of the present invention. With the embodiment of FIG. 14, encoded source video 12 is produced to decoder 1402 that decodes the encoded source video 12 to produce un-encoded video 1104. Integrated target tailoring and metadata processing circuitry 1404 receives the un-encoded video 1104, raw source video 14, target display metadata 18, similar display metadata 16, and target display information 20. Based upon its inputs and particular mode of operation, the integrated target tailoring and metadata processing circuitry 1404 produces an output to supplemental target tailoring circuitry 1406 and also produces tailored metadata 32.

Supplemental target tailoring circuitry 1406 receives as its input the output of integrated target tailoring and metadata processing circuitry 1404 and also target display information 20. The supplemental target tailoring circuitry 1406 produces as its output target display video 36 in an output to encoder 1408. Encoder 1408 encodes its inputs to produce its encoded target display video 34. The target display video 36 and encoded target display video 34 are particular to a selected target video player having a target video display.

Each of the structures of FIG. 11 through FIG. 14 may be implemented by the adaptive video processing circuitry 1000 of FIG. 10. Further, the structure and operations of the adaptive video processing circuitry 1000 of FIG. 10 and the various embodiments of FIG. 11 through 14 may be accomplished by one or more of devices of FIG. 2 having adaptive video processing functionality. Thus, the various operations of FIG. 11 through 14 may be implemented by one, two, or more than two particular processing elements/devices. The manner in which these particular processing operations are distributed amongst one, two or more processing elements/devices may be selected based on efficiencies of processing, location of resources, location of data, location of subscribers, location of service providers, or other resource allocation considerations.

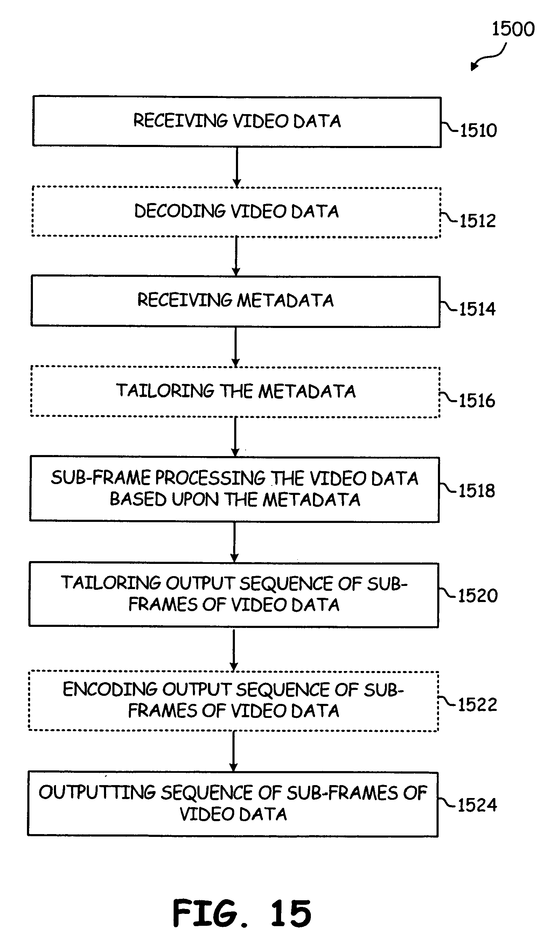

FIG. 15 is a flow chart illustrating a process for video processing according to an embodiment of the present invention. Operations 1500 of video processing circuitry according to the present invention commence with receiving video data (Step 1510). When the video data is received in an encoded format, the video processing circuitry decodes the video data (Step 1512). The video processing circuitry then receives metadata (Step 1514). This metadata may be general metadata as was described previously herein, similar metadata, or tailored metadata. When similar metadata or general metadata is received, the operation of FIG. 15 includes tailoring the metadata (Step 1516) based upon target display information. Step 1516 is optional.

Then, operation of FIG. 15 includes sub-frame processing the video data based upon the metadata (Step 1518). Then, operation includes tailoring an output sequence of sub-frames of video data produced at Step 1518 based upon target display information 20 (Step 1520). The operation of Step 1520 produces a tailored output sequence of sub-frames of video data. Then, this output sequence of sub-frames of video data is optionally encoded (Step 1522). Finally, the sequence of sub-frames of video data is output to storage, output to a target device via a network, or output in another fashion or to another locale (Step 1524).

According to one particular embodiment of FIG. 15, a video processing system receives video data representative of a sequence of full frames of video data. The video processing system then sub-frame processes the video data to generate both a first sequence of sub-frames of video data and a second sequence of sub-frames of video data. The first sequence of sub-frames of video data is defined by at least a first parameter, the second sequence of sub-frames of video data is defined by at least a second parameter, and the at least the first parameter and the at least the second parameter together comprise metadata. The video processing system then generates a third sequence of sub-frames of video data by combining the first sequence of sub-frames of video data with the second sequence of sub-frames of video data.

With this embodiment, the first sequence of sub-frames of video data may correspond to a first region within the sequence of full frames of video data and the second sequence of sub-frames of video data may correspond to a second region within the sequence of full frames of video data, with the first region different from the second region.

As one of ordinary skill in the art will appreciate, the terms "operably coupled" and "communicatively coupled," as may be used herein, include direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled" and "communicatively coupled."

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. Video circuitry that receives encoded video, the encoded video representing a sequence of full frames of video data, the video circuitry comprising:
processing circuitry that applies decoding and sub-frame processing to the encoded video to generate both a first sequence of sub-frames of video data and a second sequence of sub-frames of video data;
the first sequence of sub-frames of video data corresponding to a different region within the sequence of full frames of video data than that of the second sequence of sub-frames of video data; and
the processing circuitry generates a third sequence of sub-frames of video data by combining the first sequence of sub-frames of video data with the second sequence of sub-frames of video data.

2. The video circuitry of claim 1, wherein the processing circuitry encodes the third sequence of sub-frames of video data.

3. The video circuitry of claim 1, wherein the decoding and sub-frame processing applied by the processing circuitry occur in sequence.

4. The video circuitry of claim 1, wherein the decoding and sub-frame processing applied by the processing circuitry are integrated.

5. The video circuitry of claim 1, wherein the processing circuitry carries out the sub-frame processing pursuant to sub-frame metadata.

6. The video circuitry of claim 5, wherein the processing circuitry tailors the sub-frame metadata based on a characteristic of a target display device before carrying out the sub-frame processing.

7. Video system that receives video representative of a sequence of full frames of video data, the video circuitry comprising:
processing circuitry that applies sub-frame processing to the video to generate both a first sequence of sub-frames of video data and a second sequence of sub-frames of video data;
the first sequence of sub-frames of video data being defined by at least a first parameter, and the second sequence of sub-frames of video data being defined by at least a second parameter, both the at least the first parameter and the at least the second parameter together comprising metadata;
the processing circuitry receives the metadata for the sub-frame processing; and
the processing circuitry generates a third sequence of sub-frames of video data by combining the first sequence of sub-frames of video data with the second sequence of sub-frames of video data.

8. The video system of claim 7, wherein the processing circuitry receives the metadata via a communication link.

9. A method for video processing comprising:
receiving video data representative of a sequence of full frames of video data;
sub-frame processing the video data to generate both a first sequence of sub-frames of video data and a second sequence of sub-frames of video data, the first sequence of sub-frames of video data defined by at least a first parameter, the second sequence of sub-frames of video data defined by at least a second parameter, and the at least the first parameter and the at least the second parameter together comprise metadata; and
generating a third sequence of sub-frames of video data by combining the first sequence of sub-frames of video data with the second sequence of sub-frames of video data.

10. The method of claim 9, wherein:
the first sequence of sub-frames of video data correspond to a first region within the sequence of full frames of video data;
the second sequence of sub-frames of video data correspond to a second region within the sequence of full frames of video data; and
the first region differs from the second region.
